# EUROPEAN PATENT APPLICATION

(11) **EP 2 169 847 A2**
(43) Date of publication of application: **31.03.2010**
(21) Application number: 09169943.9
(22) Date of filing: 10.09.2009
(51) Int. Cl.: H04B 7/15

(54) **Mimo repeater apparatus, mimo handheld terminal apparatus, mimo wireless communication method**

(30) Priority: 30.09.2008 JP 2008254414
(71) Applicant: Fujitsu Limited, Kawasaki-shi, Kanagawa 211-8588 (JP)
(72) Inventor: Hossain, Md. Golam Sorwar, Kawasaki-shi Kanagawa 211-8588 (JP); Maniwa, Toru, Kawasaki-shi Kanagawa 211-8588 (JP); Kobayakawa, Shuji, Kawasaki-shi Kanagawa 211-8588 (JP)
(74) Representative: Fenlon, Christine Lesley

(57) **Abstract**

An apparatus performing wireless communication with a group of a plurality of base station antennas (211) disposed on a wireless base station apparatus side in accordance with a multi-input multi-output wireless communication system includes a group of a plurality of repeater antennas (103, 210) disposed around the body of a user. The apparatus further includes a repeater base apparatus (102, 201) being connected to the group of the repeater antennas (103, 210), communicating, with a handheld mobile terminal apparatus (101, 202) carried by the user, transmission/reception data in the handheld mobile terminal apparatus (101, 202) in accordance with a short-distance wireless communication system, and communicating, between the group of the plurality of the repeater antennas (103, 210) and the group of the base station antennas (211), the transmission/reception data in accordance with the multi-input multi-output wireless communication method.

## Description

### FIELD

The embodiments discussed herein is related to a MIMO repeater technique that provides a data communication gateway.

### BACKGROUND

A small-size wireless handheld mobile device such as a mobile phone, a PAN (Personal Area Network) device or a ZigBee device is subject to a multipath-fading environment, as well as to the influence of shadowing by the body of the user.

A wireless interface in those small-size devices commonly uses a single antenna, which makes it very difficult to ensure high-speed data communication in practical use under such conditions. An easy measure to solve such a problem is to use MIMO (Multiple Input Multiple Output) technique by mounting a plurality of antennas on the apparatus for facilitating the high-rate data processing. MIMO is a technique in which communication is performed using a plurality of antennas disposed on both the transmitting side and the receiving side, which is one of the important techniques of the 4G (fourth generation) mobile communication.

For example, a communication technique related to the MIMO technique is proposed in which a spatial multiplexing mode is used for the communication between an access point being the origin of relay and a relay device, and a high-speed eigenmode (beam forming) is used for the communication between the relay device and a terminal (see Japanese laid-open patent application No. 2007-67726).

In addition, a communication technique related to the MIMO technique is proposed in which the MIMO system is used for the communication between a base station and a plurality of relay terminals, and a communication using a different frequency is performed between the plurality of relay terminal and terminals (see Japanese laid-open patent application No. 2008-118337).

And, a communication technique related to the MIMO technique is proposed in which a near-field high-speed communication method using UWB (Ultra Wide Band) is used between the communication between a relay access point and a mobile terminal (see Japanese laid-open patent application No. 2004-350108).

However, the size limitation for systems such as a handheld mobile terminal has made the mounting of the plurality of antennas a very difficult challenge, and, for this reason, there has been a problem that the system cannot use the MIMO processing for high-speed data communication.

In addition, while the communication techniques described above are aimed at the realization of high-speed communication by means of a relay technique, they are not techniques for facilitating the mounting of a plurality of antennas for enabling the handheld mobile terminal itself to use the MIMO method, and have a problem that they require a high cost for disposing a relay (repeater) apparatus. This problem is not limited to these communication techniques described above, and caused in other communication techniques.

In addition, conventional techniques cannot remove the influence of shadowing by the body of the user.

### SUMMARY

Accordingly, it is desirable to provide a MIMO repeater technique that is capable of cooperating with a small-size mobile terminal easily and at a low cost.

Embodiments of the first aspect assume a MIMO repeater apparatus performing, in accordance with a multi-input multi-output wireless communication system, wireless communication with a group of a plurality of base station antennas disposed on a wireless base station apparatus side.

A group of a plurality of repeater antennas is disposed around a body of a user, in a vehicle or in a house. A repeater base apparatus is disposed around the body of the user, in the vehicle, or in the house, being connected to the group of the plurality of repeater antennas, communicates, with a mobile terminal apparatus carried by the user, transmission/reception data in the mobile terminal apparatus in accordance with a short-distance wireless communication system, and communicates, between the group of the repeater antennas and the group of the base station antennas, the transmission/reception data in accordance with the multi-input multi-output wireless communication method. The repeater base apparatus, for example, converts a reception signal received by the group of the repeater antennas into a serial reception signal, and transmits the serial reception signal in accordance with a short-distance wireless communication system, and converts a serial transmission signal received from the mobile terminal apparatus in accordance with the short-distance wireless communication system into a parallel transmission signal and transmits the parallel transmission signal from the group of the repeater antennas. The short-distance wireless communication system is, for example, either of a millimeter wave wireless communication system, an electromagnetic induction wireless communication system, or an electrostatic induction wireless communication system.

Embodiments of the second aspect may be applied to a mobile terminal apparatus. First, it includes a short-distance wireless communication antenna. A short-distance wireless transmitter/receptor communicates, with a repeater base apparatus, transmission/reception data in accordance with a short-distance wireless communication method using a short-distance wireless communication antenna, in order to make the repeater base apparatus communicate the transmission/reception data with a group of plurality of base station antennas disposed on a wireless base station apparatus side, using a group of a plurality of repeater antennas being wire-connected to the repeater base apparatus, in accordance with a multi-input multi-output wireless communication system.

In the configuration of embodiments of the second aspect mentioned above, a configuration may further be made so as to include a wireless transmitter/receptor communicating the transmission/reception data in accordance with a mobile wireless communication method that is not the multi-input multi-output wireless communication system; and a mode selector switching between a first communication mode in which the transmission/reception data is communicated in accordance with the short-distance wireless communication system and a second communication mode in which the transmission/reception data is communicated in accordance with the mobile wireless communication system.

### BRIEF DESCRIPTION OF DRAWINGS

Preferred features of the present invention will now be described, purely by way of example, with reference to the accompanying drawings, in which:-
Fig. 1 is a diagram illustrating an applied form of a BA-MIMO repeater system according to the embodiment.
Fig. 2 is a block diagram of a BA-MIMO repeater transmission system of an embodiment.
Fig. 3 is detail block diagram of a BA-MIMO repeater transmission system of an embodiment.
Fig. 4 is a block diagram of a BA-MIMO repeater reception system of an embodiment.
Fig. 5 is a detail block diagram of a BA-MIMO repeater reception system of an embodiment.
Fig. 6A is a block diagram of an HMT device 101 of an embodiment that is capable of operating in two modes (a normal mode and a high-speed mode).
Fig. 6B is a block diagram of an HMT device 101 of an embodiment that is capable of operating in two modes (a normal mode and a high-speed mode).
Fig. 7 is a diagram illustrating a configuration in a case in which a BA-MIMO repeater system of an embodiment is realized in a car, a bus or a train.
Fig. 8 is a diagram illustrating a configuration in a case in which a BA-MIMO repeater system of an embodiment is realized in a house.
Fig. 9 is another detail block diagram of a BA-MIMO repeater transmission system of an embodiment.
Fig. 10 is another detail block diagram of a BA-MIMO repeater reception system of an embodiment.
Fig. 11A is another block diagram of an HMT device 101 of an embodiment that is capable of operating in two modes (a normal mode and a high-speed mode).
Fig. 11B is another block diagram of an HMT device 101 of an embodiment that is capable of operating in two modes (a normal mode and a high-speed mode).

### DESCRIPTION OF EMBODIMENTS

Hereinafter, embodiments are explained in detail, with reference to the drawings. In the embodiment described below, a MIMO repeater system playing the role of transmitting large-capacity data in a small-size handheld mobile terminal (HMT) is realized.

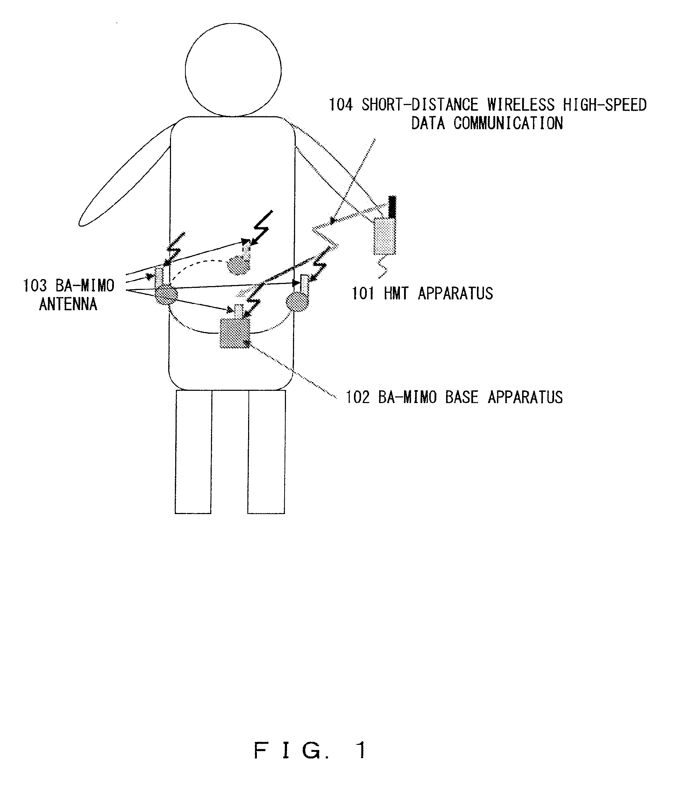

Fig. 1 is a diagram illustrating an applied form of a BA-MIMO repeater system according to the present embodiment. The repeater system according to the present embodiment can be carried while wearing it on the body, i.e., it is wearable, and covers a short-distance wireless high-speed data communication 104 for an HMT device 101 only. For this reason, in this embodiment, the repeater system is referred to as a body area-MIMO (BA-MIMO) repeater system.

In addition, the repeater system is, as described later, capable of supporting a short-distance communication in a car, a bus, a train or in a house. In the system, a user carries along the HMT device 101 that is capable of operating in two modes, i.e., a normal mode and a high-speed mode. One of the two modes, the normal mode, has also been used in a conventional HMT device, and the other of the two modes, the high-speed mode, requires the MIMO capability for processing large-capacity data. In the normal mode, low data rate communication is performed for the HMT device 101. The high-speed mode realizes the large-capacity data processing function.

A BA-MIMO repeater module is equipped on the user's body for supporting the high-speed mode. The BA-MIMO repeater module has one BA-MIMO base apparatus 102 and several BA-MIMO antennas 103. The BA-MIMO antenna 103 performs transmission/reception of data with a handheld wireless base station that is not illustrating in the drawing. In order to process the data, the BA-MIMO base apparatus 102 that is called BA-MIMO hub and is wire-connected with all BA-MIMO antenna 103 is implemented.

The BA-MIMO repeater module processes the data for the HMT device 101 partly, as if the HMT device 101 is performing the overall MIMO-data processing. The communication between the BA-MIMO repeater module and the HMT device 101 is the short-distance wireless high-speed data communication 104, which may include communications in accordance with the millimeter wave system, the electromagnetic induction system, or the electrostatic induction system.

For example, a millimeter wave has a frequency that is several tens times to several hundreds times (about 30 GHz to 300 GHz) the frequency used by a mobile phone for communication (about 1.7 GHz to 2GHz), making it possible to use considerably broader bands than the bands used under the current wireless LAN standards. Assuming a short-distance communication, a super-high-speed (over 1 Gbps (gigabit per second)) wireless communication can be performed.

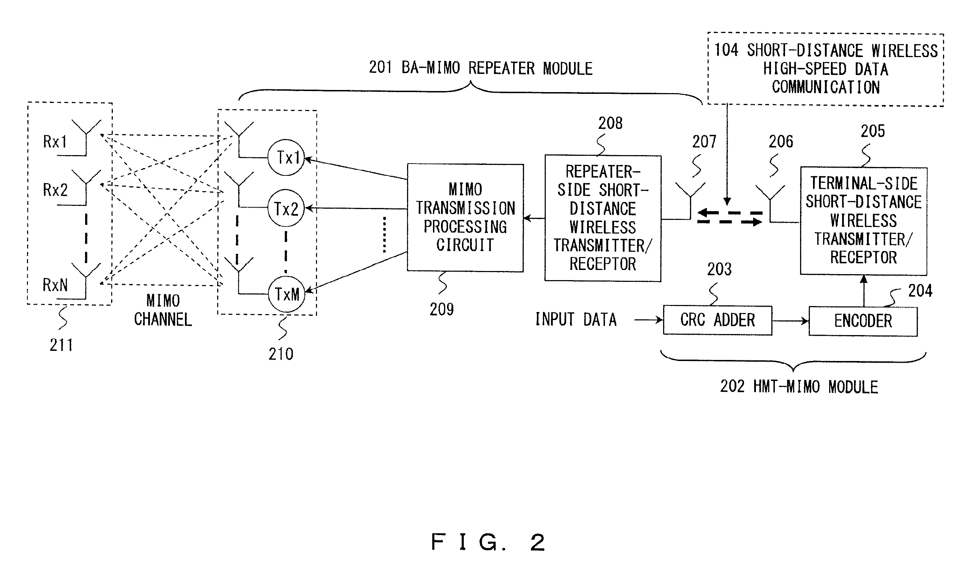

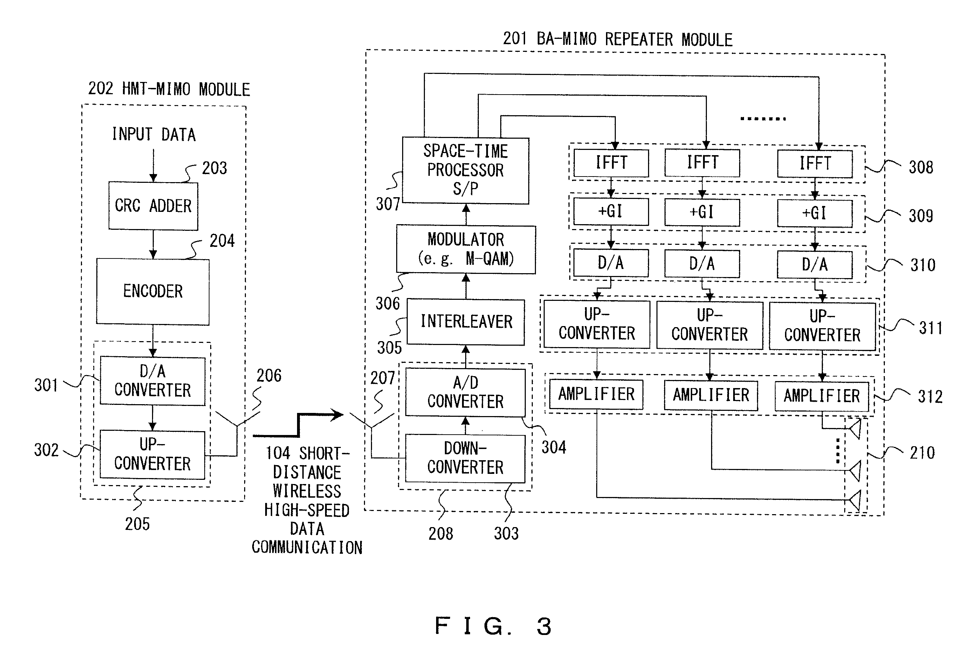

Fig. 2 is a block diagram of the BA-MIMO transmission system, and Fig. 3 is its detail block diagram. These diagrams exhibit a plurality of base station antennas 211, and a communication channel between a BA-MIMO repeater module 201 and the HMT-MIMO module 202. Here, the HMT-MIMO module 202 is disposed within the HMT device 101 in Fig. 1. In addition, the BA-MIMO repeater module 201 consists of the BA-MIMO base apparatus 102 and the BA-MIMO antenna 210 in Fig. 1. Further, a short-distance antenna 207 can be integrated with the BA-MIMO antenna 210 in Fig. 1.

Now, in the HMT device 101, input data is input to the HMT-MIMO module 202 from a high-speed communication application in the HMT device 101 or an external device (such as a personal computer) connected to the HMT device 101.

To the input data, first, a CRC adder 203 adds a CRC (Cyclic Redundancy Code) for error detection, and an encoder 204 performs encoding. The transmission code data obtained as the result is converted into an analog serial transmission signal by a D/A converter 301 in a terminal-side short-distance wireless transmitter/receptor 205.

The analog transmission signal is further up-converted into a frequency band signal for short-distance wireless communication by an up-converter 302 in the terminal-side short-distance wireless transmitter/receptor 205, and is transmitted from a short-distance antenna 206 in the HMT-MIMO module 202.

The analog serial transmission signal is received by the short-distance antenna 207 in the BA-MIMO repeater module 201, and then down-converted into a baseband frequency band signal by a down-converter 303 in a repeater-side short-distance wireless transmitter/receptor 208, and converted into a digital serial transmission signal by an A/D converter 304 in the repeater-side short-distance wireless transmitter/receptor 208.

When, for example, the millimeter wave communication is adopted for the short-distance wireless high-speed data communication 104 between the short-distance antennas 206 and 207, super-high-speed wireless serial data communication using a very high frequency band as described above is realized, in the area around the body as illustrated in Fig. 1. The combination of the short-distance communication method in the body area and the MIMO system used between the mobile base station and the BA-MIMO repeater module 201 realizes stable and high-speed data communication.

A MIMO transmission processing circuit 209 in Fig. 2 corresponds to the part of 305-312 in Fig. 3. The digital serial transmission signal is interleaved by an interleaver 305 to enhance the error tolerance, and then modulated by a modulator 306. For the modulation method, for example, an M-QAM (Quadradure Amplitude Modulation) such as 16QAM or a 64QAM is adopted.

The modulated transmission signal obtained as the result is converted from a serial stream to a parallel stream formatted for the MIMO transmission by a space-time processor 307. An IFFT (Inverse Fast Fourier Transform) block group 308 performs insertion of a pilot signal and conversion of the frequency band modulated signal into a group of a plurality of pieces of time-region data.

A +GI block group 309 adds, to each output stream from the IFFT block group 308, a guard interval that is redundancy data for coping with the multipath fading. A baseband transmission signal group obtained as the result is up-converted into a mobile-wireless frequency band signal group, amplified by an amplifier group 312, and then transmitted from a plurality of BA-MIMO antennas 210 to a plurality of base station antennas 211.

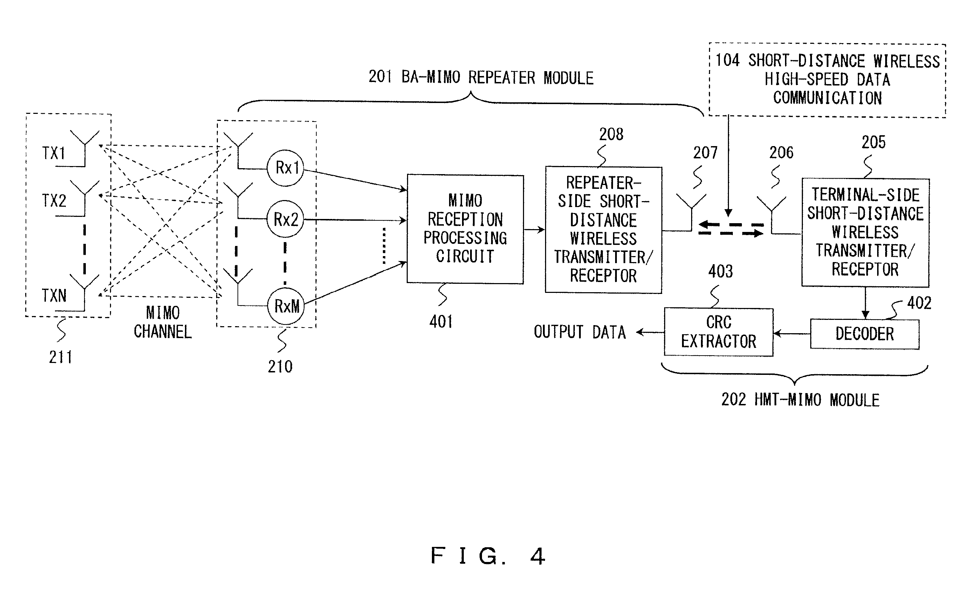

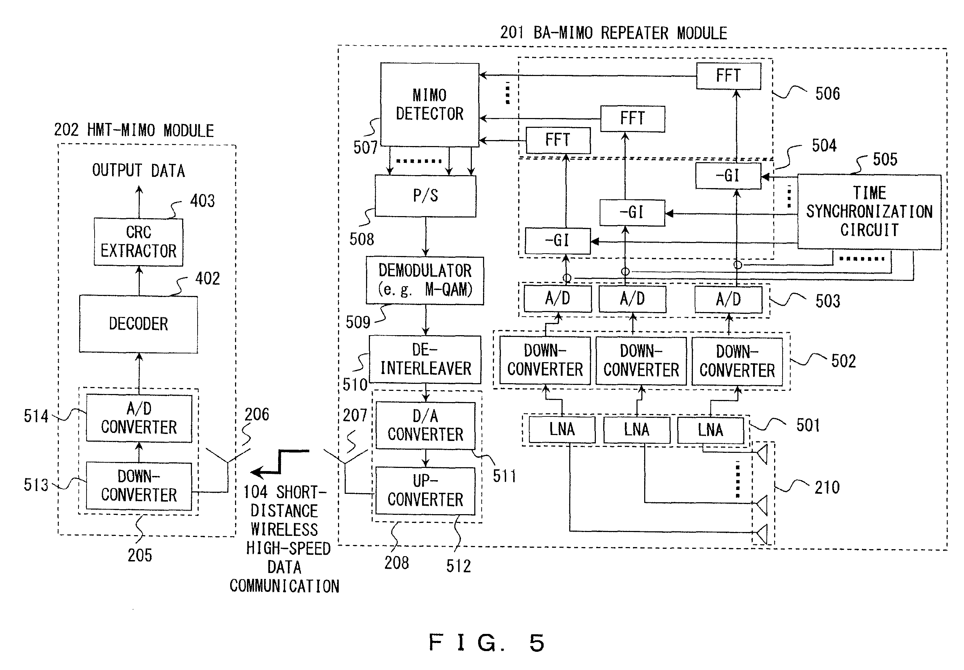

Fig. 4 is a block diagram of a BA-MIMO reception system, and Fig. 5 is its more detail block diagram. These diagrams illustrate, in the same manner as Fig. 2, a plurality of base station antennas 211, and the communication channel between the BA-MIMO repeater module 201 and the HMT-MIMO module 202.

A MIMO reception processing circuit 401 in Fig. 4 corresponds to the part of 501-510 in Fig. 5. A reception signal group received by the plurality of BA-MIMO antennas 210 from the plurality of base station antennas 211 is amplified by an LNA (Low Noise Amplifier) group 501, and then down-converted from the mobile-wireless frequency band signal group into a baseband frequency band signal group by a down-converter group 502, and converted from the analog reception signal group into a digital signal group by a A/D converter group 503.

Next, a -GI block group 504 that operates while being controlled by a time-synchronization circuit 505 removes the guard interval from the digital reception signal group. Further, a FFT (Fast Fourier Transform) block group 506 converts the time-region digital reception signal group into a frequency-region digital reception signal group.

After that, a MIMO detector 507 performs channel estimation with regard to the digital reception signal group described above, for processing the MIMO data. Then, a parallel/serial converter 508 converts a parallel reception signal group output from the MIMO detector 507 into a serial reception signal.

The serial reception signal is demodulated by a demodulator 509, and then subjected to an inverse interleave process by a de-interleaver 510, and converted into an analog serial reception signal by a D/A converter 511 in the repeater-side short-distance wireless transmitter/receptor 208.

Then, the analog serial reception signal is up-converted from the baseband frequency band signal into a frequency band signal for short-distance wireless communication, by an up-converter 512 in the repeater-side short-distance wireless transmitter/receptor 208, and transmitted from the short-distance antenna 207 in the BA-MIMO repeater module 201.

The analog serial reception signal is received by the short-distance antenna 206 in the HMT-MIMO module 202, and then down-converted from the frequency band signal for short-distance wireless communication into a baseband frequency band signal by a down-converter 513 in the terminal-side short-distance wireless transmitter/receptor 205, and converted into a digital reception signal by an A/D converter 514 in the terminal-side short-distance wireless transmitter/receptor 205.

Then, the digital reception signal is decoded by a decoder 402, and further subjected to a CRC check by a CRC extractor 403, to obtain the final output data.

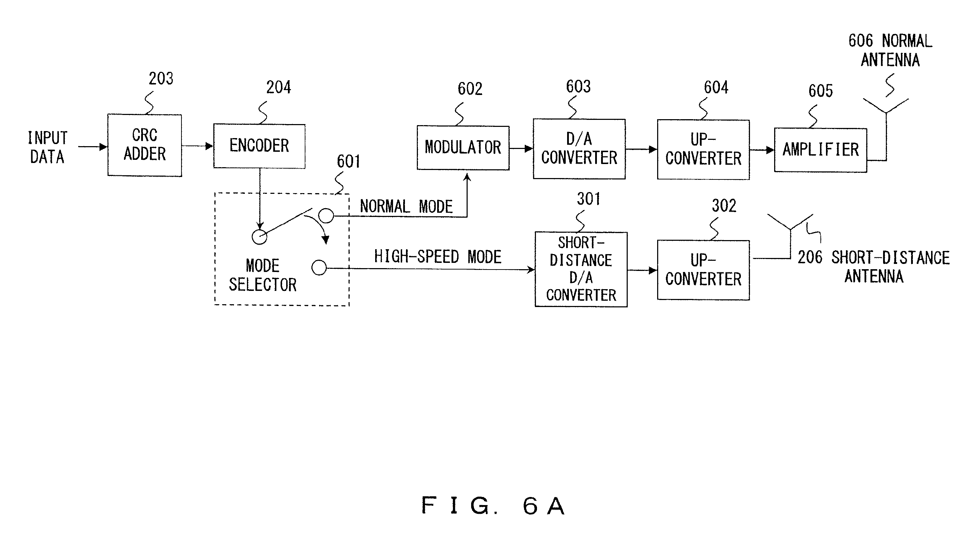

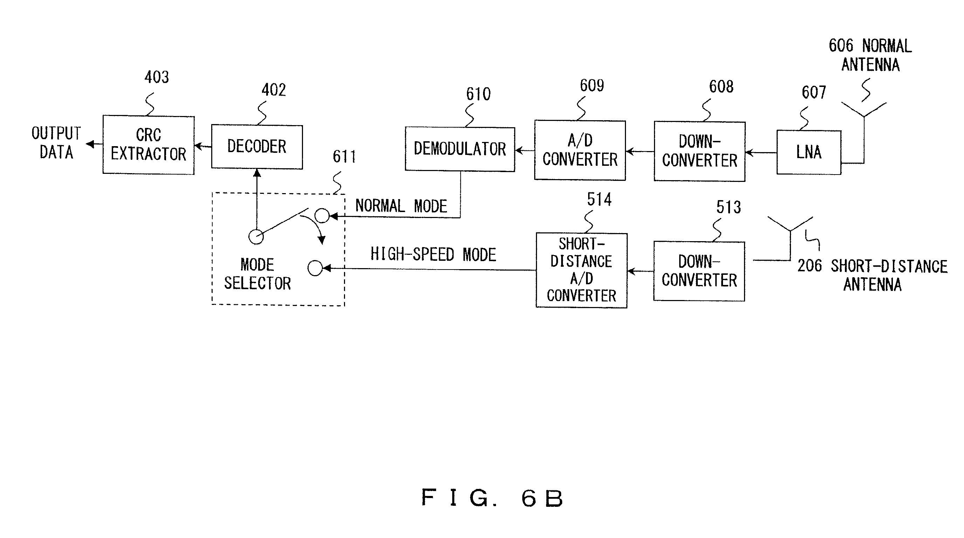

Figs. 6 are block diagrams of an HMT device 101 that is capable of operating in two modes (a normal mode and a high-speed mode) . Fig. 6A is a block diagram of the HMT device of the transmission system, in which parts having the same numbers as the parts in Fig. 2 and Fig. 3 perform the same operations. The operation of each of 203, 204, 301 and 302 when a mode selector 601 selects the high-speed mode is as described above in the descriptions of Fig. 2 and Fig. 3.

Meanwhile, when the normal mode is selected by the mode selector 601, the transmission data output from the encoder 204 is modulated by a modulator 602, and then converted into an analog transmission signal by a D/A converter 603. Further, the analog transmission signal is up-converted into a normal mobile-wireless frequency band signal by an up-converter 604, amplified by an amplifier 605, and then transmitted from a normal antenna 606 for the normal mobile-wireless communication. In this case, the communication between the base station is performed, not in accordance with the MIMO system but in accordance with the normal mobile-wireless system.

Fig. 6B is a block diagram of the HMT device 101 of the HMT reception system, in which parts having the same numbers as the parts in Fig. 2 and Fig. 3 perform the same operations. The operation of each of 513, 514, 402 and 403 when a mode selector 611 selects the high-speed mode is as described above in the descriptions of Fig. 4 and Fig. 5.

Meanwhile, when the mode selector 611 selects the normal mode, the reception signal in accordance with the normal mobile-wireless system received by the normal antenna 606 is amplified by an LNA (Low Noise Amplifier) 607, and then down-converted from the mobile-wireless frequency signal group into a baseband frequency band signal group by a down-converter 608, and converted from the analog reception signal into a digital signal by an A/D converter 609. The digital reception signal is demodulated by a demodulator 610, and then decoded by the decoder 402 and goes through the CRC extractor 403. The final output data is thus obtained.

In the configurations in Fig. 6A andFig. 6B, the mode selectors 601 and 611 monitor the data amount during the communication, and if they determine, as a result of the monitoring, that the high-speed data communication is required, a switch to the high-speed mode is performed and the BA-MIMO repeater process described above is performed. When the mode selectors 601 and 611 determine, as a result of the monitoring of the data amount while during the communication, that the high-speed data communication is not required, they selects the normal mode to perform the normal mobile-wireless communication that does not use the MIMO system.

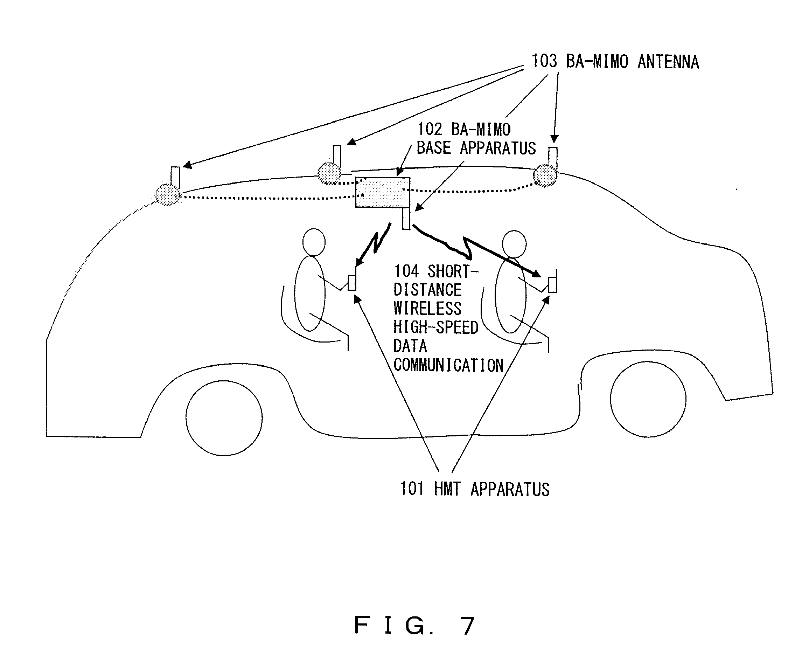

Fig. 7 is a diagram illustrating a configuration in a case in which a BA-MIMO repeater system is realized in a car, a bus or a train. The BA-MIMO base apparatus 102 can be configured to perform the BA-MIMO repeater process described above by parallel task processing for each user, in order to cope with the HMT apparatuses 101 with multi-users.

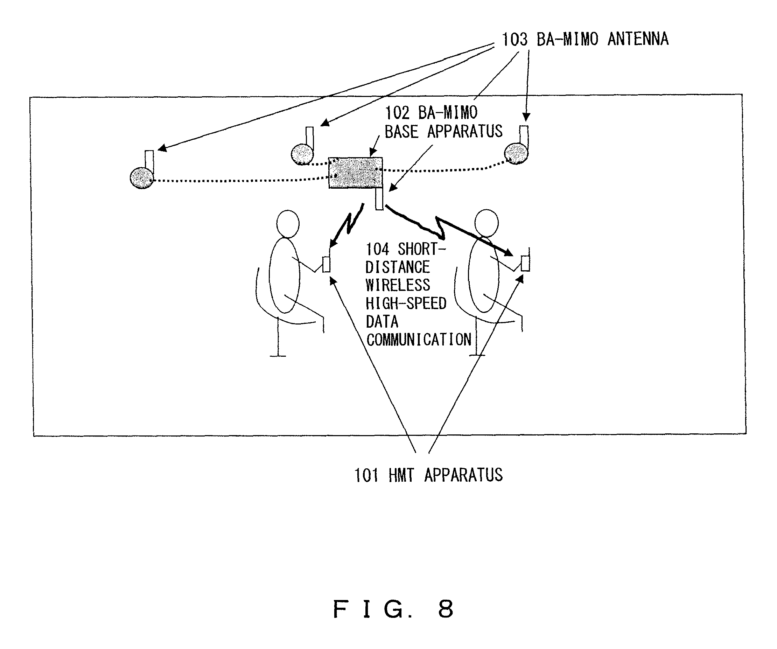

Fig. 8 is a diagram illustrating a configuration in a case in which a BA-MIMO repeater system is realized in a house. In this case also, the BA-MIMO base apparatus 102 is able to coping with the HMT apparatuses 101 with multi-uses by the parallel task processing.

While in the embodiment above, the MIMO process is configured to be performed in the BA-MIMO repeater module 201 in the BA-MIMO base apparatus 102 as illustrated in Fig. 3 or Fig. 5, the MIMO process may also be configured to be performed in the HMT-MIMO module 202 in the HMT device 101.

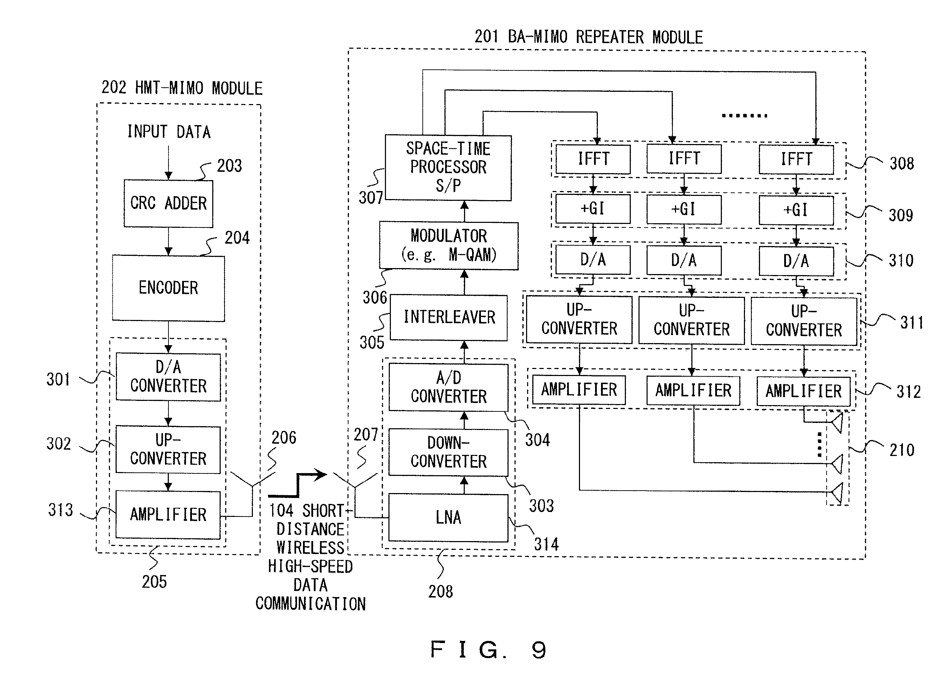

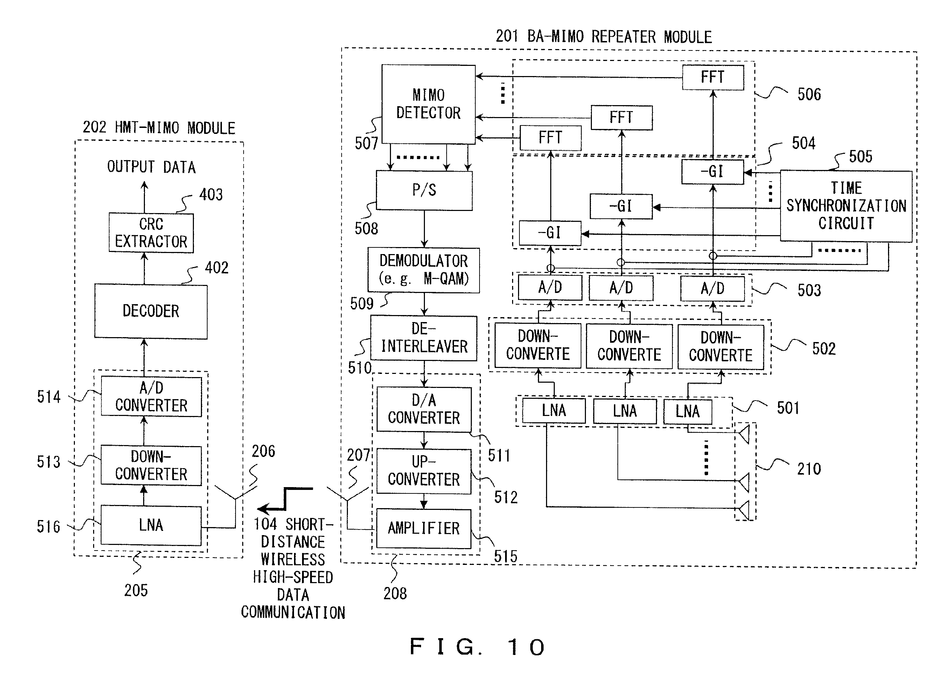

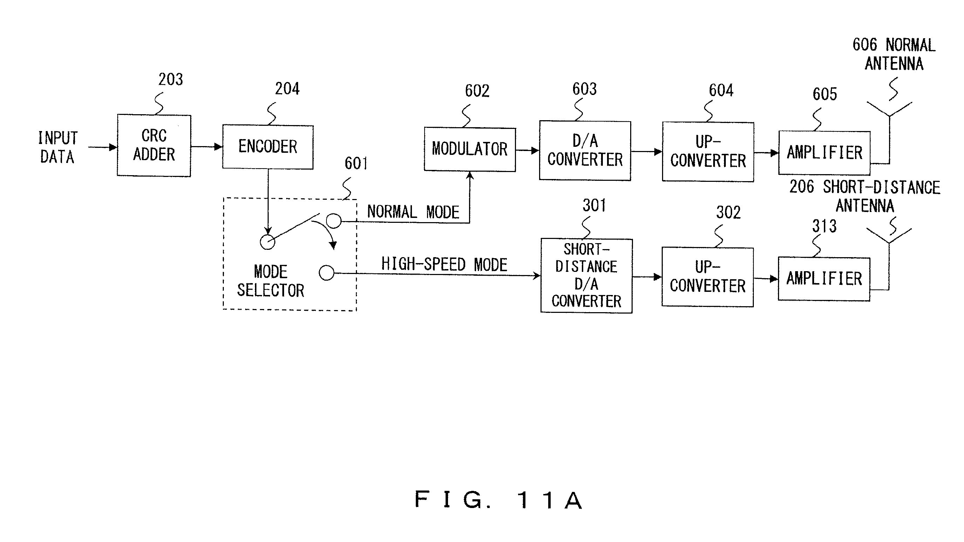

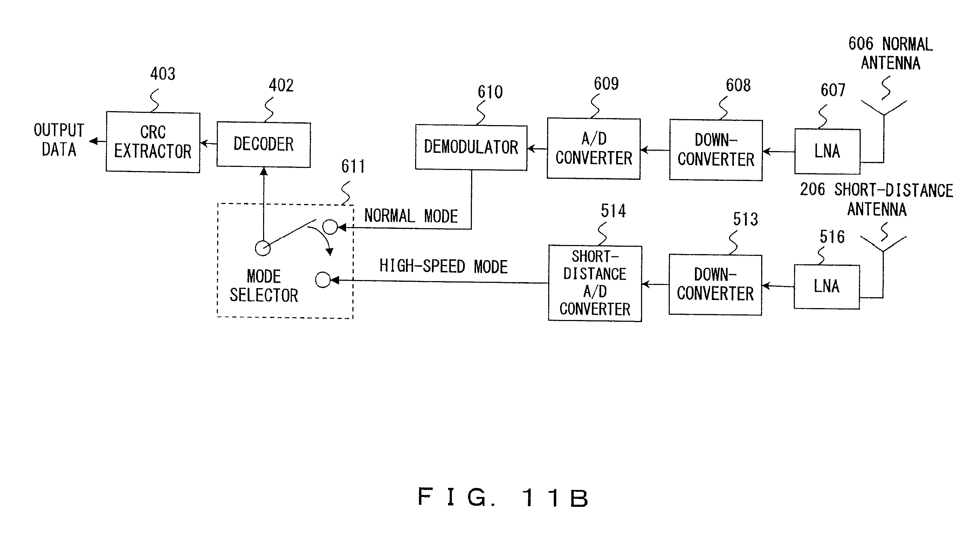

In addition, as illustrated in Fig. 9 (corresponding to Fig. 3), Fig. 10 (corresponding to Fig. 5), Fig. 11 (corresponding to Fig. 6), LNAs 314, 516 may be disposed in the preceding stages of the down-converters 303, 513, and amplifiers 313, 515 may be disposed in the subsequent stages of the up-converters 302, 512, in order to ensure higher-quality communication in the short-distance wireless high-speed data communication.

The near-field MIMO repeater apparatus in the embodiment makes it possible to provide new characteristics for processing high-speed data stably in accordance with MIMO, without sacrifice due to the limitation on the size of a handheld mobile terminal apparatus.

In addition, by configuring the handheld mobile terminal of the embodiment to be able to switch between the normal mobile wireless communication mode without using a near-field MIMO repeater apparatus and the high-speed MIMO communication mode using the near-field MIMO repeater apparatus, the usability for users can be improved.

All examples and conditional language recited herein are intended for pedagogical purposes to aid the reader in understanding the invention and the concepts contributed by the inventor to furthering the art, and are to be construed as being without limitation to such specifically recited example and conditions, nor does the organization of such examples in the specification relate to a showing of the superiority and inferiority of the invention embodiments. Although the embodiment(s) of the present invention have been described in detail, it should be understood that the various changes, substitutions, and alterations could be made hereto without departing from the scope of the invention.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

## Claims

1. A MIMO (Multiple Input Multiple Output) repeater apparatus performing wireless communication, comprising:
a group of a plurality of repeater antennas (103, 210) disposed in a given area around a user; and
a repeater base apparatus (102, 201) disposed the given area, being wire-connected to the group of the plurality of repeater antennas (103, 210), communicating, with a mobile terminal apparatus (101, 202) carried by the user, data in the mobile terminal apparatus (101, 202) in accordance with a short-distance wireless communication system, and communicating, between the group of the repeater antennas (103, 210) and a group of a plurality of base station antennas (211) disposed on a wireless base station apparatus side, the data in accordance with a MIMO wireless communication system.

2. The MIMO repeater apparatus according to claim 1, wherein
the group of the plurality of repeater antennas (103, 210) are disposed around a body of the user, and
the repeater base apparatus (102, 201) is disposed around the body of the user.

3. The MIMO repeater apparatus according to claim 1, wherein
the group of a plurality of repeater antennas (103, 210) are disposed in a vehicle,
the repeater base apparatus (102, 201) is disposed in the vehicle, and
the mobile terminal apparatus (101, 202) carried by the user in the vehicle.

4. The MIMO repeater apparatus according to claim 1 or 2, wherein
the group of the plurality of repeater antennas (103, 210) are disposed in a house,
the repeater base apparatus (102, 201) is disposed in the house, and
the mobile terminal apparatus (101, 202) is carried by the user in the house.

5. The MIMO repeater apparatus according to any of claims 1 to 4, wherein
the repeater base apparatus (102, 201) converts a reception signal received by the group of the repeater antennas (103, 210) into a serial reception signal and transmits the serial reception signal to the mobile terminal apparatus (101, 202) in accordance with the short-distance wireless communication system; and
converts a serial transmission signal received from the handheld mobile terminal apparatus (101, 202) in accordance with the short- distance wireless communication system into a parallel transmission signal and transmits the parallel transmission signal from the group of the repeater antennas (103, 210).

6. The MIMO repeater apparatus according to any of claims 1 to 5, wherein
the short-distance wireless communication system is either of a millimeter wave wireless communication system, an electromagnetic induction wireless communication system, or an electrostatic induction wireless communication system.

7. A MIMO (Multiple Input Multiple Output) mobile terminal apparatus comprising;
a short-distance wireless communication antenna; and
a short-distance wireless communicator communicating, with a repeater base apparatus (102, 201), data in accordance with a short-distance wireless communication system using the short-distance wireless communication antenna, in order to make the repeater base apparatus (102, 201) communicate the data with a group of a plurality of base station antennas (211) disposed on a wireless base station apparatus side, using a group of a plurality of repeater antennas (103, 210) being wire-connected to the repeater base apparatus (102, 201), in accordance with a MIMO wireless communication system.

8. The MIMO mobile terminal apparatus according to claim 7, further comprising:
a wireless communicator communicating the data in accordance with a mobile wireless communication system that is not the MIMO wireless communication system; and
a mode selector switching between a first communication mode in which the data is communicated in accordance with the short-distance wireless communication system and a second communication mode in which the data is communicated in accordance with the mobile wireless communication system.

9. The MIMO mobile terminal apparatus according to claim 7 or 8, wherein
the short-distance wireless communication system is either of a millimeter wave wireless communication system, an electromagnetic induction wireless communication system, or an electrostatic induction wireless communication system.

10. A MIMO (Multiple Input Multiple Output) wireless communication method for performing wireless communication with a group of a plurality of base station antennas (211) disposed on a wireless base station apparatus side in accordance with a MIMO wireless communication system, comprising
communicating, between a repeater base apparatus (102, 201) disposed in a given area around a user being wire-connected to a group of the repeater antennas (103, 210) disposed in the given area and a mobile terminal apparatus (101, 202) carried by the user, data in the mobile terminal apparatus (101, 202) in accordance with a short-distance wireless communication system; and
communicating the data between the group of the repeater antennas(103, 210) and the group of the base station antennas (211) in accordance with the MIMO wireless communication system.

11. The MIMO wireless communication method according to claim 10, wherein
the group of the plurality of repeater antennas (103, 210) are disposed around a body of the user, and
the repeater base apparatus (102, 201) is disposed around the body of the user.

12. The MIMO wireless communication method according to claim 10, wherein
the group of a plurality of repeater antennas (103, 210) are disposed in a vehicle,
the repeater base apparatus (102, 201) is disposed in the vehicle, and
the mobile terminal apparatus (101, 202) carried by the user in the vehicle.

13. The MIMO wireless communication method according to claim 10 or 11, wherein
the group of the plurality of repeater antennas (103, 210) are disposed in a house,
the repeater base apparatus (102, 201) is disposed in the house, and
the mobile terminal apparatus (101, 202) is carried by the user in the house.

14. The MIMO wireless communication method according to any of claims 10 to 13, wherein
converting a reception signal received by the group of the repeater antennas (103, 210) into a serial reception signal and transmitting the serial reception signal to the mobile terminal apparatus (101, 202) in accordance with the short-distance wireless communication system; and
converting a serial transmission signal received from the mobile terminal apparatus (101, 202) in accordance with the short- distance wireless communication system into a parallel transmission signal and transmitting the parallel transmission signal from the group of the repeater antennas (103, 210).

15. The MIMO wireless communication method according to any of claims 10 to 14, wherein
the short-distance wireless communication system is either of a millimeter wave wireless communication system, an electromagnetic induction wireless communication system, or an electrostatic induction wireless communication system.
